# EUROPÄISCHE PATENTSCHRIFT

(11) **EP 3 636 982 B1**
(45) Veröffentlichungstag und Bekanntmachung des Hinweises auf die Patenterteilung: **04.08.2021**
(21) Anmeldenummer: 18199223.1
(22) Anmeldetag: 09.10.2018
(51) Int. Cl.: G05D 7/06, C09K 5/04

(54) **VERFAHREN UND VORRICHTUNG ZUM BEREITSTELLEN ZEOTROPER KÄLTEMITTEL**
METHOD AND DEVICE FOR PROVIDING ZEOTROPIC COOLANT
PROCÉDÉ ET DISPOSITIF DE FOURNITURE D'UN RÉFRIGÉRANT ZÉOTROPE

(43) Veröffentlichungstag der Anmeldung: 15.04.2020
(73) Patentinhaber: Weiss Technik GmbH, 35447 Reiskirchen (DE)
(72) Erfinder: AYDIN, Murat, 35390 Giessen (DE); KLEE, Gerald, 35325 Mücke (DE)
(74) Vertreter: advotec.

(56) Entgegenhaltungen:
- EP-A1- 1 008 799
- WO-A1-98/44288
- JP-A- 2001 141 193
- US-A- 5 709 093

## Beschreibung

Die Erfindung betrifft ein Verfahren und eine Vorrichtung zum Bereitstellen zeotroper Kältemittel, wobei das Kältemittel aus einem Kältemittelgemisch aus zumindest zwei Komponenten ausgebildet wird, wobei die Komponenten im Verhältnis ihrer jeweiligen Masseanteile an dem Kältemittel in einen Behälter dosiert werden und in dem Behälter das Kältemittelgemisch ausgebildet wird, wobei während einer Entnahme von Kältemittel aus dem Behälter eine Konzentration der Komponenten konstant bleibt, ohne dass dem Behälter weiter Komponenten zugeführt werden.

Kältemittel zirkulieren im Allgemeinen innerhalb eines geschlossenen Kühlkreislaufs von Kältemaschinen und erfahren nacheinander verschiedene Änderungen eines Aggregatzustandes. Dabei sollen Kältemittel so beschaffen sein, dass sie in einem Kühlkreislauf innerhalb einer vorgegebenen Temperaturdifferenz verwendbar sind. Aus dem Stand der Technik sind sogenannte Einstoffkältemittel und auch Kältemittelgemische aus zumindest zwei oder mehr Stoffen bekannt. Eine Benennung der Kältemittel erfolgt nach DIN 8960 Absatz 6.

Infolge gesetzlicher Bestimmungen darf ein Kältemittel nicht wesentlich zum Ozonabbau in der Atmosphäre oder der globalen Erwärmung beitragen. Darüber hinaus sollte ein Kältemittel nicht brennbar sein, um unter anderem eine Befüllung, einen Versand und einen Betrieb eines Kühlkreislaufs nicht aufgrund eventuell einzuhaltender Sicherheitsvorschriften zu erschweren. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 beziehungsweise der DIN 378 Klassen A2, A2L und A3 fällt.

Darüber hinaus sollte ein Kältemittel ein relativ geringes CO₂-Äquivalent aufweisen, das heißt ein relatives Treibhauspotential oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 20 Jahre festgelegt werden. Zur Definition des relativen CO₂-Äquivalents beziehungsweise GWPs wird auf den fünften Sachstandsbericht des Intergovernmental Panel on Climate Change (IPCC), Assessment Report, Appendix 8.A, Table 8.A.1, verwiesen.

Azeotrope Kältemittelgemische verhalten sich wie reine Stoffe mit konstanten Eigenschaften, das heißt eine Taukurve und eine Siedekurve eines azeotropen Kältemittelgemisches berühren sich mindestens in einem Punkt, sodass eine Zusammensetzung des azeotropen Kältemittelgemisches in einer Gasphase oder einer Flüssigphase stets gleich ist. Bei einem zeotropen Kältemittelgemisch erfolgt ein Phasenübergang über einen Temperaturbereich, dem sogenannten Temperaturgleit. Als Temperaturgleit wird dabei eine Differenz zwischen der Siedetemperatur und der Taupunkttemperatur bei konstantem Druck angesehen. Bei einem zeotropen Kältemittelmittelgemisch berühren sich daher eine Taukurve und eine Siedekurve in keinem Punkt, sodass zwischen der Taukurve und der Siedekurve ein Zustandsraum entsteht, in dem das Kältemittelgemisch in keinem stabilen Zustand vorliegt. Dieser Zustandsraum wird auch als Mischungslücke bezeichnet. Das Kältemittelgemisch entmischt sich hier in zumindest zwei verschiedene Phasen mit unterschiedlichen Zusammensetzungen. So kann eine Flüssigphase eine höhere Konzentration des Leichtsieders des Kältemittelgemisches enthalten. Wird nun ein in einem Behälter gelagertes Kältemittelgemisch aus diesem entnommen, kommt es immer zu einer Konzentrationsänderung des Kältemittelgemisches, wenn diese Entnahme aus der Flüssigphase oder der Gasphase erfolgt. Bei einem fallenden Behälterfüllstand ändert sich somit die Zusammensetzung des Kältemittelgemisches in der Gasphase und auch in der Flüssigphase. Diese Veränderung in der Zusammensetzung kann dazu führen, dass die Zusammensetzung des Kältemittelgemisches nicht mehr der eingefüllten Zusammensetzung des Kältemittelgemisches entspricht. Dieses Problem tritt bei der Lagerung von verflüssigten Gasen in der Kältetechnik regelmäßig auf.

In der WO 02/084168 A1 wird ein Verfahren zur Lagerung von verflüssigten Gasen in einem Behälter beschrieben. Sobald sich bei einer Entnahme aus dem Behälter eine Zusammensetzung in Folge einer Entmischung ändert, wird eine Komponente des Gemisches nachdosiert, um die gewünschte Zusammensetzung wieder einzustellen. So kann innerhalb einer bestimmen Toleranz ein Stoffgemisch bereitgestellt werden.

Aus der EP 1 008 799 A1 ist ein Verfahren bzw. eine Vorrichtung zum Mischen und Lagern von zeotropen Kältemitteln bekannt. Dabei werden verflüssigte Komponenten des Kältemittels gemischt und in einen Behälter gefüllt, wobei eine Temperatur in dem Behälter so eingestellt wird, dass im Wesentlichen keine Entmischung der Komponenten erfolgt.

Die JP 2001 141193 A beschreibt ebenfalls ein Verfahren und eine Vorrichtung zum Mischen und Lagern zeotroper Gase bzw. Flüssigkeiten, insbesondere von Aerosolen. Hier soll eine Entmischung eines flüssigen Gasgemisches bei einer Entnahme aus einem Behälter verhindert werden.

Die WO 98/44288 A1 betrifft einen Behälter zur Aufbewahrung eines zeotropen Kältemittels mit zumindest zwei Komponenten. Unter anderem ist innerhalb des Behälters eine Membran vorgesehen, über die ein Druck in dem Behälter ausgeglichen werden kann, um eine Entmischung der Komponenten zu verhindern.

Der vorliegenden Erfindung liegt daher die Aufgabe zugrunde, ein Verfahren und eine Vorrichtung zum Bereitstellen zeotroper Kältemittel vorzuschlagen, mit dem bzw. der mit einfachen Mitteln eine vergleichsweise genaue Gemischzusammensetzung während einer Entnahme aus einem Behälter erzielt werden kann.

Diese Aufgabe wird durch ein Verfahren mit den Merkmalen des Anspruchs 1, eine Vorrichtung mit den Merkmalen des Anspruchs 5 und eine Kältemaschine mit den Merkmalen des Anspruchs 19 gelöst.

Bei dem erfindungsgemäßen Verfahren zum Bereitstellen zeotroper Kältemittel wird das Kältemittel aus einem Kältemittelgemisch aus zumindest zwei Komponenten ausgebildet, wobei die Komponenten im Verhältnis ihrer jeweiligen Masseanteile an dem Kältemittel über Dosierventile in einen Behälter dosiert werden, und in dem Behälter das Kältemittelgemisch ausgebildet wird, wobei während einer Entnahme von Kältemittel aus dem Behälter eine Konzentration der Komponenten konstant bleibt, ohne dass dem Behälter weiter Komponenten zugeführt werden, wobei mittels einer Regelvorrichtung eine Temperatur in dem Behälter so eingestellt wird, dass das Kältemittel ausschließlich in der Gasphase vorliegt, wobei die Temperatur des vollständig gasförmigen Kältemittels mittels einer Temperaturregeleinrichtung der Regelvorrichtung geregelt wird.

Demnach stellt die Regelvorrichtung sicher, dass eine Temperatur in dem Behälter stets so geregelt wird, dass das Kältemittel vollständig entweder in der Gasphase vorliegt, sodass die spezifische Mischungslücke des Kältemittels umgangen wird. Das Kältemittel kann dann in der Gasphase aus dem Behälter entnommen werden, ohne dass es zu einer Änderung der Konzentration der zumindest zwei Komponenten des Kältemittelgemisches innerhalb des Behälters kommt. Dann ist es auch nicht mehr erforderlich, eine Komponente aufwendig nachzudosieren, und es kann eine wesentlich genauere Gemischzusammensetzung des Kältemittels bei der Entnahme aus dem Behälter erzielt werden. Das Kältemittel kann prinzipiell in dem Behälter durch das Dosieren der zumindest zwei Komponenten in dem Behälter hergestellt und in dem Behälter gelagert werden.

Während einer Entnahme von Kältemittel aus dem Behälter bleibt folglich eine Konzentration der Komponenten, aus denen das Kältemittelgemisch besteht, konstant, ohne dass dem Behälter weitere Komponenten zugeführt werden müssen. Prinzipiell ist es somit möglich, das fertig ausgebildete Kältemittel in dem Behälter zu lagern und nicht erst in dem Behälter durch Zuführung der Komponenten zu mischen. Auf einer Zuführung der Komponenten in dem Behälter kann daher auch verzichtet werden, wenn das fertige Kältemittelgemisch bzw. Kältemittel dem Behälter zugeführt wird.

Erfindungsgemäß wird die Temperatur des vollständig gasförmigen Kältemittels mittels einer Temperaturregeleinrichtung der Regelvorrichtung geregelt. Die Temperaturregeleinrichtung kann dann so beschaffen sein, dass, je nach Kältemittelgemisch, eine Temperatur innerhalb des Behälters so einstellbar ist, dass sich das Kältemittel stets ausschließlich im gasförmigen Zustand befindet und die Mischungslücke des Kältemittels umgangen bzw. verhindert wird.

In einer weiteren Ausführungsform des Verfahrens kann ergänzend zu einer Temperaturregelung der Druck des vollständig gasförmigen Kältemittels mittels einer Druckregeleinrichtung der Regelvorrichtung geregelt werden. Mit der Druckregeleinrichtung kann dann der Druck in einem Innenraum des Behälters stets so eingestellt werden, dass das Kältemittel vollständig gasförmig in dem Behälter vorliegt. Auch hier kann durch die Regelung des Drucks sichergestellt werden, dass eine Mischungslücke des Kältemittels umgangen wird.

Das Kältemittel kann mit einem Temperaturgleit von ≥ 10 K bevorzugt ≥ 15 K, besonders bevorzugt ≥ 18 K, ausgebildet sein. Ein Temperaturgleit des Kältemittels sollte dabei nicht > 20 K sein, damit eine Kühleinrichtung sinnvoll betrieben werden kann.

Das Kältemittel kann mit einem relativen CO₂-Äquivalent, bezogen auf 20 Jahre, von > 2500, bevorzugt > 1500, besonders bevorzugt > 500, ausgebildet werden. Folglich kann das Kältemittel wenig umweltschädlich sein.

Weiter kann das Kältemittel nicht brennbar ausgebildet werden. Wenn das Kältemittel nicht brennbar ist, wird es möglich, einen Kühlkreislauf und insbesondere eine Kältemaschine kostengünstiger auszubilden, da keine besonderen Sicherheitsvorkehrungen hinsichtlich der Brennbarkeit des Kältemittels zu beachten sind. Das Kältemittel kann dann zumindest nicht der Brandklasse C und/oder der Kältemittelsicherheitsgruppe A1 zugeordnet werden. Darüber hinaus wird ein Versand beziehungsweise ein Transport des Kühlkreislaufs vereinfacht, da der Kühlkreislauf bereits vor einem Transport, unabhängig von der Transportart, mit dem Kältemittel befüllt werden kann. Bei brennbarem Kältemittel ist gegebenenfalls erst eine Befüllung im Rahmen einer Inbetriebnahme am Aufstellort möglich. Weiter ist eine Verwendung des nicht brennbaren Kältemittels bei vorhandenen Zündquellen möglich.

Das Kältemittel kann zur Verwendung für eine Temperatur in einem Temperaturbereich von -60 °C bis +180 °C, bevorzugt -70 °C bis +180 °C, besonders bevorzugt -80 °C bis +180 °C, ausgebildet werden.

Das Kältemittelgemisch kann demnach so beschaffen sein, dass es in diesem Temperaturbereich in einer Kältemaschine, insbesondere einem Kühlkreislauf, verwendbar ist.

Das Kältemittel kann aus einem Masseanteil Kohlendioxid und einem Masseanteil mindestens einer weiteren Komponente ausgebildet werden. Die weitere Komponente kann einen geringen GWP aufweisen und nicht oder eingeschränkt brennbar sein. Ein Anteil an Kohlendioxid muss dabei möglichst gering sein, da sonst ein Gefrierpunkt des Kältemittelgemisches mit einem steigenden Masseanteil von Kohlendioxid zunimmt, wenn mit einem Kühlkreislauf vergleichsweise niedrige Temperaturen erzielt werden sollen. Kohlendioxid weist eine Gefriertemperatur bzw. einen Gefrierpunkt von -56,6 °C auf, was eine Erzielung von Temperaturen bis -60 °C bei einer hohen Kohlendioxidkonzentration sonst kaum ermöglicht.

Die erfindungsgemäße Vorrichtung zum Bereitstellen zeotroper Kältemittel, wobei das Kältemittel aus einem Kältemittelgemisch aus zumindest zwei Komponenten besteht, umfasst zumindest zwei Dosierventile und einen Behälter, in den über die Dosierventile die Komponenten im Verhältnis ihrer jeweiligen Masseanteile an dem Kältemittel zur Ausbildung des Kältemittelgemisches dosierbar sind, wobei während einer Entnahme von Kältemittel aus dem Behälter eine Konzentration der Komponenten konstant haltbar ist, ohne dass dem Behälter weiter Komponenten zugeführt werden, wobei die Vorrichtung eine Regelvorrichtung aufweist, mittels der eine Temperatur in dem Behälter so einstellbar ist, dass das Kältemittel ausschließlich in der Gasphase vorliegt, wobei die Regelvorrichtung eine Temperaturregeleinrichtung aufweist. Zu den Vorteilen der erfindungsgemäßen Vorrichtung wird auf die Vorteilsbeschreibung des erfindungsgemäßen Verfahrens verwiesen.

Die Regelvorrichtung kann eine Druckregeleinrichtung aufweisen. Mit der Temperaturregeleinrichtung ist es möglich, eine Temperatur in einem Innenraum des Behälters so zu regeln, dass ein Zustand des Kältemittels innerhalb einer Mischungslücke des Kältemittels ausgeschlossen werden kann. Weiter ist es möglich ergänzend mit der Druckregeleinrichtung einen Druck im Innenraum des Behälters entsprechend zu regeln.

Die Druckregeleinrichtung kann eine flexible Membran aufweisen, die in einem Innenraum des Behälters angeordnet sein kann, wobei die Membran den Innenraum in einen Aufnahmeraum zur Aufnahme des Kältemittels und einen Ausgleichsraum zur Aufnahme eines Ausgleichsgases teilen kann. Die Membran kann aus einem flexiblen Material beschaffen sein oder auch in Art eines Kolbens oder Ähnlichem ausgebildet sein, sodass eine stetige Änderung eines Volumens des Aufnahmeraums und des Ausgleichsraums durch einen räumlichen Versatz der Membran möglich wird. Bei einer Volumenänderung im Innenraum des Behälters durch Entnahme des Kältemittels aus dem Ausgleichsraum kann die Membran der Volumenänderung in dem Aufnahmeraum folgen und den Aufnahmeraum soweit vergrößern, dass sich beispielsweise ein Druck oberhalb eines Dampfdrucks des Kältemittels einstellt, in dem das Kältemittel vollständig verflüssigt vorliegt. Während einer Entnahme des Kältemittels kann dann auch keine Entmischung des Kältemittels erfolgen und stets eine gleichbleibende Konzentration der Komponenten des Kältemittelgemisches im Behälter sichergestellt werden. Ein Verhältnis zwischen einem Volumen des Aufnahmeraums und des Ausgleichsraums richtet sich hier stets nach einem Druck, wobei eine möglichst vollständige Entleerung des Behälters bzw. des Aufnahmeraums ohne eine Entmischung des Kältemittels gewährleistet werden kann. Das Ausgleichsgas kann hinsichtlich seiner Art, seiner Menge und seines Drucks entsprechend ausgewählt werden.

Insbesondere kann der Ausgleichsraum mit Stickstoff gefüllt sein. Wie sich herausgestellt hat, ist Stickstoff bzw. molekularer Stickstoff hinsichtlich seiner physikalischen Eigenschaften besonders vorteilhaft als Ausgleichsgas nutzbar.

Die Druckregeleinrichtung kann einen Drucksensor zum Messen eines Behälterinnendrucks und ein an den Behälter angeschlossenes Druckausgleichventil aufweisen. Der Drucksensor kann direkt oder durch ein Regelglied der Regelvorrichtung an das Druckausgleichsventil angeschlossen bzw. mit diesem verbunden sein. Über das Druckausgleichsventil kann dann Kältemittel aus dem Behälter in eine Umgebung abgegeben oder beispielsweise über eine Pumpe dem Behälter zugeführt werden, sodass stets der gewünschte Behälterinnendruck eingestellt werden kann. Der Drucksensor kann auch in dem Druckausgleichsventil integriert sein. Weiter kann die Druckregeleinrichtung auch so beschaffen sein, dass der Drucksensor örtlich unabhängig von dem Druckausgleichsventil positioniert ist und die Regelung mittels einer Regelelektronik erfolgt.

Die Temperaturregeleinrichtung kann einen Temperatursensor zum Messen einer Behälterinnentemperatur und eine an den Behälter angeschlossene und/oder darin angeordnete Temperiereinheit aufweisen. Die Temperiereinheit kann beispielsweise an einer Außenwand des Behälters anliegen oder auch innerhalb des Behälters angeordnet sein. Die Temperiereinheit kann in Art eines Wärmetauschers ausgebildet sein. Weiter kann die Temperiereinheit zur Kühlung und/oder Erwärmung des Behälterinnenraums ausgebildet sein. Eine Kühlung des Behälterinnenraums kann einfach durch einen Wärmetauscher eines Kühlkreislaufs der Temperiereinheit und ein Erwärmen durch eine elektrische Heizeinrichtung, beispielsweise einen Heizstab, realisiert werden. Der Temperatursensor kann an eine Regelelektronik der Temperaturregeleinrichtung bzw. an ein Regelglied angeschlossen sein, worüber die Temperiereinheit so geregelt wird, dass sich eine gewünschte Behälterinnentemperatur einstellt.

Die Vorrichtung kann eine Pumpe zum Fördern von Komponenten in dem Behälter aufweisen. Die Pumpe kann dann ein Kältemittelgemisch in den Behälter fördern und dort einen gewünschten Druck ausbilden. Das Kältemittelgemisch kann bei der Förderung durch die Pumpe in einer Gasphase vorliegen.

Die Vorrichtung kann ein Ablassventil zur Entnahme des Kältemittels aus dem Behälter aufweisen. Über das Ablassventil wird dann eine dosierte Entnahme des Kältemittels aus dem Behälter möglich. Das Ablassventil kann beispielsweise mit einem weiteren Behälter zum Transport des Kältemittels oder auch einem Kühlkreislauf einer Kältemaschine verbunden sein, wenn die Kältemaschine mit dem Kältemittel befüllt werden soll.

Die Vorrichtung kann für jeweils eine Komponente einen Vorratsbehälter mit einer Zuführleitung aufweisen, wobei in der Zuführleitung zur Zuführung der Komponente zu dem Behälter ein Dosierventil und ein Massenstromsensor angeschlossen sein können. Je nach Anzahl der Komponenten des Kältemittelgemisches kann daher für jede der Komponenten ein Vorratsbehälter zur Lagerung der jeweiligen Komponente verwendet werden. An jeden Vorratsbehälter kann jeweils eine Zuführleitung angeschlossen sein, über die die Komponente in dem Behälter eingeleitet werden kann. Zur Dosierung der Komponenten im gewünschten Verhältnis sind in jeder Zuführleitung das Dosierventil und der Massenstromsensor angeordnet. Über den Massenstromsensor kann ein Masseanteil der über das Dosierventil in dem Behälter eingeleiteten Komponente gemessen und geregelt werden. Auch ist es möglich, dass die Zuführleitungen nicht unmittelbar an den Behälter angeschlossen sind, sodass vor Einleitung der Komponenten in den Behälter eine Mischung der Komponenten erfolgt und das so ausgebildete Kältemittelgemisch über eine einzelne Zuführleitung in den Behälter eingeleitet wird.

Weiter können die Zuführleitungen an einen statischen Mischer oder einen Strahlmischer der Vorrichtung angeschlossen sein. Die Zuführleitungen werden dann vor oder in dem statischen Mischer oder dem Strahlmischer zusammengeführt, wobei nachfolgend im statischen Mischer oder dem Strahlmischer und vor dem Behälter in einer an den Behälter angeschlossenen Zuführleitung eine Pumpe angeordnet sein kann. Die Pumpe kann insbesondere auch ein Kompressor sein.

Weitere vorteilhafte Ausführungsformen der Vorrichtung ergeben sich aus den Merkmalsbeschreibungen der auf den Verfahrensanspruch 1 zurückbezogenen Unteransprüche.

Die erfindungsgemäße Kältemaschine weist eine erfindungsgemäße Vorrichtung auf. Die Kältemaschine kann einen Kühlkreislauf umfassen, an den die Vorrichtung angeschlossen ist. So wird es möglich die Kältemaschine bzw. den Kühlkreislauf mit den Kältemitteln beispielsweise zu befüllen.

Nachfolgend werden bevorzugte Ausführungsformen der Erfindung unter Bezugnahme auf die beigefügten Zeichnungen näher erläutert.

Es zeigen:
- **Fig. 1.**: Eine schematische Darstellung einer ersten Ausführungsform einer Vorrichtung;
- **Fig. 2.**: eine schematische Darstellung einer zweiten Ausführungsform einer Vorrichtung.

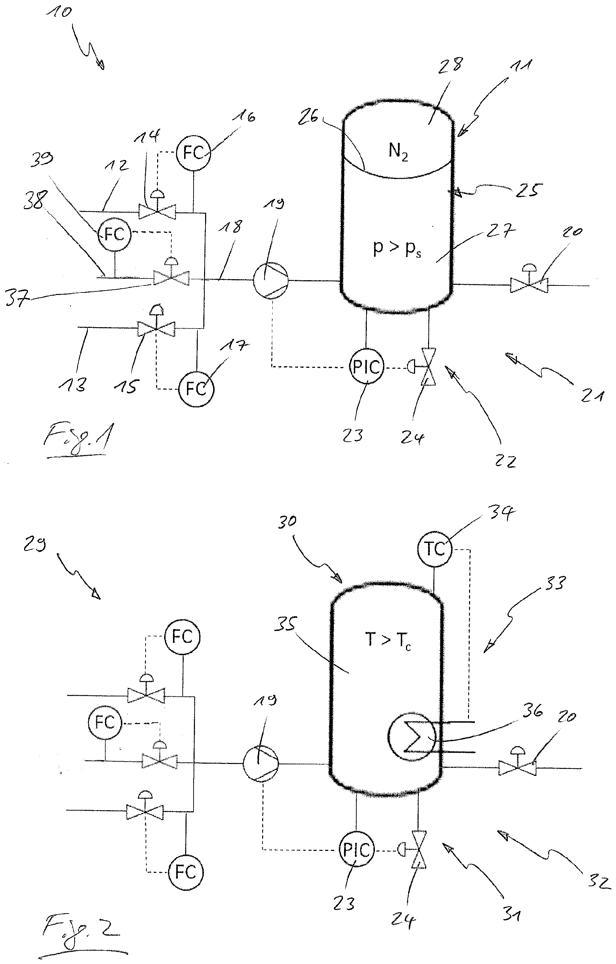

Die **Fig. 1** zeigt eine Vorrichtung 10 zum Bereitstellen zeotroper Kältemittel, wobei die Vorrichtung 10 einen Behälter 11 zur Herstellung bzw. Lagerung eines hier nicht ersichtlichen Kältemittelgemisches aus zumindest zwei Komponenten aufweist. Die Vorrichtung 10 umfasst weiter für jede der Komponenten eine Zuführleitung 12, 13, 38 mit in der Zuführleitung 12, 13 bzw. 38 angeordneten Dosierventilen 14, 15 und 37 sowie Massenstromsensoren 16, 17 bzw. 39. Die Zuführleitungen 12, 13 und 38 sind jeweils an einen nicht dargestellten Vorratsbehälter zur Bevorratung der jeweiligen Komponente angeschlossen. Über die Dosierventile 14, 15 und 37 ist jeweils eine Dosierung eines Masseanteiles der betreffenden Komponente an dem Kältemittel in dem Behälter 11 möglich, wobei über die Massenstromsensoren 16, 17 und 39 die Dosierventile 14, 15 bzw. 37 jeweils geregelt werden können.

Die Zuführleitungen 12, 13 und 38 werden in der Zuführleitung 18 so zusammengeführt, dass eine Mischung der jeweiligen Komponenten in der Zuführleitung 18 erfolgt. Die Zuführleitung 18 ist direkt mit dem Behälter 11 verbunden, und in der Zuführleitung 18 ist eine Pumpe 19 der Vorrichtung 10 angeordnet, über die das Kältemittelgemisch in den Behälter 11 unter Druck eingebracht werden kann. An dem Behälter 11 ist weiter ein Ablassventil 20 zur Entnahme des Kältemittels aus dem Behälter 11 angeordnet. An das Ablassventil 20 kann beispielsweise ein weiterer Behälter oder auch ein Kühlkreislauf, der dann mit dem Kältemittel befüllt werden kann, angeschlossen werden.

Die Vorrichtung 10 verfügt weiter über eine Regelvorrichtung 21, die hier nur teilweise dargestellt ist. Die Regelvorrichtung 21 weist eine Druckregeleinrichtung 22 auf, die einen Drucksensor 23 zum Messen eines Behälterinnendrucks des Behälters 11 und ein an den Behälter 11 angeschlossenes Druckausgleichsventil 24 aufweist. Über das Druckausgleichsventil 24 kann Kältemittel aus dem Behälter 11 zur Reduzierung des Behälterinnendrucks abgelassen werden. Weiter kann über den Drucksensor 23 die Pumpe 19 betätigt werden, wenn eine Erhöhung eines Behälterinnendrucks oder eine Befüllung des Behälters 11 erforderlich sein sollte. Die Druckregeleinrichtung 22 kann über hier nicht dargestellte Regelglieder und Mittel zur Betätigung des Druckausgleichventils 24 und der Pumpe 19 verfügen.

Die Druckregeleinrichtung 22 ist bei dieser Ausführungsform der Vorrichtung 10 so ausgebildet, dass in einem Innenraum 25 des Behälters 11 eine flexible Membran 26 angeordnet ist, die den Innenraum 25 in einen Aufnahmeraum 27 zur Aufnahme des Kältemittels und einen Ausgleichsraum 28 aufteilt, der hier mit molekularem Stickstoff befüllt ist. Eine durch eine Entnahme von Kältemittel aus dem Aufnahmeraum 27 bewirkte Volumenänderung des Aufnahmeraums bzw. Füllstandsänderung wird durch eine entsprechende Änderung des Volumens des Ausgleichsraums 28 über die Membran 26 ausgeglichen, wobei sich stets ein Druck oberhalb eines Dampfdrucks des Kältemittels in dem Aufnahmeraum 27 einstellt, derart, dass das Kältemittel vollständig verflüssigt vorliegt und somit bei der Entnahme des Kältemittels aus dem Behälter 11 eine Entmischung des Kältemittels verhindert wird.

Die **Fig. 2** zeigt eine weitere Ausführungsform einer Vorrichtung 29, die im Unterschied zur Vorrichtung aus **Fig. 1** einen Behälter 30 mit einer Druckregeleinrichtung 31 aufweist. Die Druckregeleinrichtung 31 umfasst hier ebenfalls einen Drucksensor 23 und ein Druckausgleichsventil 24. Eine Regelvorrichtung 32 der Vorrichtung 29 weist neben der Druckregeleinrichtung 31 eine Temperaturregeleinrichtung 33 auf. Die Temperaturregeleinrichtung 33 umfasst einen Temperatursensor 34 zum Messen einer Behälterinnentemperatur bzw. einer Temperatur eines im Innenraum 35 des Behälters 30 befindlichen Kältemittels sowie eine im Innenraum 35 angeordnete Temperiereinheit 36. Mit der Temperiereinheit 36 ist ein Kühlen bzw. Erwärmen des Kältemittels in dem Innenraum 35 möglich. Eine Regelung der Temperiereinheit 36 erfolgt in Abhängigheit eines Messwertes des Temperatursensors 34, sodass stets eine Temperatur des Kältemittels in dem Innenraum so eingestellt werden kann, dass das Kältemittel ausschließlich in der Gasphase in dem Innenraum vorliegt. Eine Entmischung des Kältemittels bei einer Entnahme des Kältemittels aus dem Behälter 30 kann so verhindert werden.

## Patentansprüche

1. Verfahren zum Bereitstellen zeotroper Kältemittel, wobei das Kältemittel aus einem Kältemittelgemisch aus zumindest zwei Komponenten ausgebildet wird, wobei die Komponenten im Verhältnis ihrer jeweiligen Masseanteile an dem Kältemittel über Dosierventile (14, 15, 37) in einen Behälter (11, 30) dosiert werden und in dem Behälter das Kältemittelgemisch ausgebildet wird, wobei während einer Entnahme von Kältemittel aus dem Behälter eine Konzentration der Komponenten konstant bleibt, ohne dass dem Behälter weiter Komponenten zugeführt werden,
**dadurch gekennzeichnet,**
**dass** mittels einer Regelvorrichtung (21, 32) eine Temperatur in dem Behälter so eingestellt wird, dass das Kältemittel ausschließlich in der Gasphase vorliegt, wobei die Temperatur des vollständig gasförmigen Kältemittels mittels einer Temperaturregeleinrichtung (33) der Regelvorrichtung geregelt wird.

2. Verfahren nach Anspruch 1,
**dadurch gekennzeichnet,**
**dass** mittels der Regelvorrichtung (21, 32) die Temperatur und ein Druck in dem Behälter so eingestellt wird, dass das Kältemittel ausschließlich in der Gasphase vorliegt.

3. Verfahren nach Anspruch 1 oder 2,
**dadurch gekennzeichnet,**
**dass** der Druck des vollständig gasförmigen Kältemittels mittels einer Druckregeleinrichtung (22, 31) der Regelvorrichtung (21, 32) geregelt wird.

4. Verfahren nach einem der vorangehenden Ansprüche,
**dadurch gekennzeichnet,**
**dass** das Kältemittel aus einem Masseanteil Kohlendioxid (CO₂) und einem Masseanteil mindestens einer weiteren Komponente ausgebildet wird.

5. Vorrichtung zum Bereitstellen zeotroper Kältemittel, wobei das Kältemittel aus einem Kältemittelgemisch aus zumindest zwei Komponenten besteht, wobei die Vorrichtung zumindest zwei Dosierventile (14, 15, 37) und einen Behälter (11, 30) umfasst, in den über die Dosierventile die Komponenten im Verhältnis ihrer jeweiligen Masseanteile an dem Kältemittel zur Ausbildung des Kältemittelgemisches dosierbar sind, wobei während einer Entnahme von Kältemittel aus dem Behälter eine Konzentration der Komponenten konstant haltbar ist, ohne dass dem Behälter weiter Komponenten zugeführt werden,
**dadurch gekennzeichnet,**
**dass** die Vorrichtung eine Regelvorrichtung (21, 32) aufweist, mittels der eine Temperatur in dem Behälter so einstellbar ist, dass das Kältemittel ausschließlich in der Gasphase vorliegt, wobei die Regelvorrichtung eine Temperaturregeleinrichtung (33) aufweist.

6. Vorrichtung nach Anspruch 5,
**dadurch gekennzeichnet,**
**dass** mittels der Regelvorrichtung (21, 32) ein Druck in dem Behälter so einstellbar ist, dass das Kältemittel ausschließlich in der Gasphase vorliegt, wobei die Regelvorrichtung eine Druckregeleinrichtung (22, 31) aufweist.

7. Vorrichtung nach Anspruch 6,
**dadurch gekennzeichnet,**
**dass** die Druckregeleinrichtung (22, 31) eine flexible Membran (26) aufweist, die in einem Innenraum (25) des Behälters (11) angeordnet ist, wobei die Membran den Innenraum in einen Aufnahmeraum (27) zur Aufnahme des Kältemittels und einen Ausgleichsraum (28) zur Aufnahme eines Ausgleichsgases teilt.

8. Vorrichtung nach Anspruch 7,
**dadurch gekennzeichnet,**
**dass** der Ausgleichsraum (28) mit Stickstoff (N₂) befüllt ist.

9. Vorrichtung nach einem der Ansprüche 6 bis 8,
**dadurch gekennzeichnet,**
**dass** die Druckregeleinrichtung (22, 31) einen Drucksensor (23) zum Messen eines Behälterinnendrucks und ein an den Behälter (11, 30) angeschlossenes Druckausgleichsventil (24) aufweist.

10. Vorrichtung nach einem der Ansprüche 5 bis 9,
**dadurch gekennzeichnet,**
**dass** die Temperaturregeleinrichtung (33) einen Temperatursensor (34) zum Messen einer Behälterinnentemperatur und eine an den Behälter (30) angeschlossene und/oder darin angeordnete Temperiereinheit (36) aufweist.

11. Vorrichtung nach einem der Ansprüche 5 bis 10,
**dadurch gekennzeichnet,**
**dass** die Vorrichtung (10, 29) eine Pumpe (19) zum Fördern von Komponenten in den Behälter (11, 30) aufweist.

12. Vorrichtung nach einem der Ansprüche 5 bis 11,
**dadurch gekennzeichnet,**
**dass** die Vorrichtung (10, 29) ein Ablassventil (20) zur Entnahme des Kältemittels aus dem Behälter (11, 30) aufweist.

13. Vorrichtung nach einem der Ansprüche 5 bis 12,
**dadurch gekennzeichnet,**
**dass** die Vorrichtung (10, 29) für jeweils eine Komponente einen Vorratsbehälter mit einer Zuführleitung (12, 13, 38) aufweist, wobei in der Zuführleitung zur Zuführung der Komponente zu dem Behälter (11, 30) ein Dosierventil (14, 15, 37) und ein Massenstromsensor (16, 17, 39) angeschlossen sind.

14. Vorrichtung nach Anspruch 13,
**dadurch gekennzeichnet,**
**dass** die Zuführleitungen (12, 13, 18, 37) an einen statischen Mischer oder einen Strahlmischer der Vorrichtung (10, 29) angeschlossen sind.

15. Vorrichtung nach einem der Ansprüche 5 bis 14,
**dadurch gekennzeichnet,**
**dass** das Kältemittel mit einem Temperaturgleit von ≥ 10 K, bevorzugt ≥ 15 K, besonders bevorzugt ≥ 18 K, ausgebildet ist.

16. Vorrichtung nach einem der Ansprüche 5 bis 15,
**dadurch gekennzeichnet,**
**dass** das Kältemittel mit einem relativen CO₂-Äquivalent, bezogen auf 20 Jahre, von < 2500, bevorzugt < 1500, besonders bevorzugt < 500, ausgebildet ist.

17. Vorrichtung nach einem der Ansprüche 5 bis 16,
**dadurch gekennzeichnet,**
**dass** das Kältemittel nicht brennbar ausgebildet ist.

18. Vorrichtung nach einem der Ansprüche 5 bis 17,
**dadurch gekennzeichnet,**
**dass** das Kältemittel zur Verwendung für eine Temperatur in einem Temperaturbereich von -60 °C bis +180 °C, bevorzugt -70 °C bis +180 °C, besonders bevorzugt -80 °C bis +180 °C, ausgebildet ist.

19. Kältemaschine mit einer Vorrichtung (10, 29) nach einem der Ansprüche 5 bis 18.

## Claims

1. A method for providing zeotropic refrigerants in which the refrigerant is formed from a refrigerant blend of at least two components, the components being added to a container (11, 30) via dosing valves (14, 15) in the ratio of their respective mass fractions to the refrigerant, and the refrigerant blend being formed in the container, the concentration of the components remaining constant during removal of refrigerant from the container without further components being fed to the container
**characterised in that**
the temperature in the container is set by means of a control device (21, 32) such that the refrigerant is present exclusively in the gas phase, the temperature of the completely gaseous refrigerant being controlled by means of a temperature control means (33) of the control device.

2. The method according to claim 1,
**characterised in that**
the temperature and the pressure in the container are set by means of the control device (21, 32) such that the refrigerant is present exclusively in the gas phase.

3. The method according to claim 1 or 2,
**characterised in that**
the pressure of the completely gaseous refrigerant is controlled by means of a pressure control means (22, 31) of the control device (21, 32).

4. The method according to any one of the preceding claims, **characterised in that**
the refrigerant is formed from a mass fraction of carbon dioxide (CO₂) and a mass fraction of at least one further component.

5. A device for providing zeotropic refrigerants, the refrigerant consisting of a refrigerant blend of at least two components, the device comprising at least two dosing valves (14, 15, 37) and a container (11, 30) to which the components can be added via the dosing valves in the ratio of their respective mass fractions to the refrigerant in order to form the refrigerant blend, wherein the concentration of the components can be kept constant during removal of refrigerant from the container without further components being fed to the container
**characterised in that**
the device has a control device (21, 32) by means of which the temperature in the container can be set such that the refrigerant is present exclusively in the gas phase, the control device having a temperature control means (33).

6. The device according to claim 5,
**characterised in that**
the pressure in the container is set by means of the control device (21, 32) such that the refrigerant is present exclusively in the gas phase, the control device having a pressure control means (22, 31).

7. The device according to claim 6,
**characterised in that**
the pressure control means (22, 31) has a flexible diaphragm (26) which is situated in an interior (25) of the container (11), wherein the diaphragm divides the interior into an accommodation space (27) for accommodating the refrigerant and an equalisation space (28) for accommodating an equalisation gas.

8. The device according to claim 7,
**characterised in that**
the equalisation space (28) is filled with nitrogen (N₂).

9. The device according to any one of claims 6 to 8, **characterised in that**
the pressure control means (22, 31) has a pressure sensor (23) for measuring a container inner pressure and a pressure equalisation valve (24) connected to the container (11, 30).

10. The device according to any one of claims 5 to 9, **characterised in that**
the temperature control means (33) has a temperature sensor (34) for measuring a container inner temperature and a temperature adjustment unit (36) connected to the container (30) and/or situated therein.

11. The device according to any one of claims 5 to 10, **characterised in that**
the device (10, 29) has a pump (19) for conveying components into the container (11, 30).

12. The device according to any one of claims 5 to 11, **characterised in that**
the device (10, 29) has an outlet valve (20) for removing the refrigerant from the container (11, 30).

13. The device according to any one of claims 5 to 12, **characterised in that**
the device (10, 29) has a storage container with a feed line (12, 13, 38) for each component, wherein a dosing valve (14, 15, 37) and a mass flow sensor (16, 17, 39) are connected in the feed line for feeding the components to the container (11, 30).

14. The device according to claim 13,
**characterised in that**
the feed lines (12, 13, 18, 37) are connected to a static mixer or a jet mixer of the device (10, 29).

15. The device according to any one of claims 5 to 14, **characterised in that**
the refrigerant has a temperature glide of ≥ 10 K, preferably ≥ 15 K, particularly preferably ≥ 18 K.

16. The device according to any one of claims 5 to 15, **characterised in that**
the refrigerant has a relative CO₂ equivalent, over 20 years, of < 2500, preferably < 1500, particularly preferably < 500.

17. The device according to any one of claims 5 to 16,
**characterised in that**
the refrigerant is non-combustible.

18. The device according to any one of claims 5 to 17,
**characterised in that**
the refrigerant is designed to be used for a temperature within a temperature range of -60 °C to +180 °C, preferably -70 °C to +180 °C, particularly preferably -80 °C to +180 °C.

19. A refrigeration machine having a device (10, 29) according to any one of Claims 5 to 18.

## Revendications

1. Procédé destiné à fournir des réfrigérants zéotropiques, lesdits réfrigérants étant faits d'un mélange de réfrigérants se composant d'au moins deux composants, lesdits composants étant ajoutés à un récipient (11, 30) par des vannes de dosage (14, 15) en proportion de leurs pourcentages en masse respectives dans le réfrigérant et le mélange de réfrigérants étant formé dans le récipient, la concentration des composants restant constante lors d'un prélèvement du réfrigérant du récipient sans ajouter autres composants au récipient **caractérisé en ce que**
la température dans le récipient est réglée moyennant un dispositif de réglage (21, 32) de telle façon que le réfrigérant existe seulement dans la phase gazeuse, la température du réfrigérant complètement gazeux étant réglée moyennant un moyen de réglage de la température (33) du dispositif de réglage.

2. Procédé selon la revendication 1,
**caractérisé en ce que**
la température et la pression dans le récipient sont réglées moyennant le dispositif de réglage (21, 32) de telle façon que le réfrigérant existe seulement dans la phase gazeuse.

3. Procédé selon la revendication 1 ou 2,
**caractérisé en ce que**
la pression du réfrigérant complètement gazeux est réglée moyennant un moyen de réglage de la pression (22, 31) du dispositif de réglage (21, 32).

4. Procédé selon l'une quelconque des revendications précédentes, **caractérisé en ce que**
le réfrigérant est formé d'un pourcentage en masse de dioxyde de carbone (CO₂) et un pourcentage en masse d'au moins un autre composant.

5. Dispositif destiné à fournir des réfrigérants zéotropiques, lesdits réfrigérants se composant d'un mélange de réfrigérants d'au moins deux composants, le dispositif comprenant au moins deux vannes de dosage (14, 15, 37) et un récipient (11, 30) auquel les composants peuvent être ajoutés par les vannes de dosage en proportion de leurs pourcentages en masse respectives dans le réfrigérant pour former le mélange de réfrigérants, la concentration des composants pouvant être maintenue constante lors du prélèvement du réfrigérant du récipient sans ajouter autres composants au récipient
**caractérisé en ce que**
le dispositif comporte un dispositif de réglage (21, 32) moyennant lequel la température dans le récipient peut être réglée de telle façon que le réfrigérant existe seulement dans la phase gazeuse, ledit dispositif de réglage comportant un moyen de réglage de la température (33).

6. Dispositif selon la revendication 5,
**caractérisé en ce que**
la pression dans le récipient peut être réglée moyennant le dispositif de réglage (21, 32) de telle façon que le réfrigérant existe seulement dans la phase gazeuse, ledit dispositif de réglage comportant un moyen de réglage de la pression (22, 31).

7. Dispositif selon la revendication 6,
**caractérisé en ce que**
le moyen de réglage de la pression (22, 31) comporte une membrane (26) flexible qui est disposée dans un intérieur (25) du récipient (11), ladite membrane divisant l'intérieur en un espace de logement (27) pour recevoir le réfrigérant et un espace d'équilibrage (28) pour recevoir un gaz d'équilibrage.

8. Dispositif selon la revendication 7,
**caractérisé en ce que**
l'espace d'équilibrage (28) est rempli de l'azote (N₂).

9. Dispositif selon l'une quelconque des revendications 6 à 8, **caractérisé en ce que**
le moyen de réglage de la pression (22, 31) comporte un capteur de pression (23) pour mesurer la pression intérieure du récipient et une vanne d'équilibrage de pression (24) reliée au récipient (11, 30).

10. Dispositif selon l'une quelconque des revendications 5 à 9, **caractérisé en ce que**
le moyen de réglage de la température (33) comporte un capteur de température (34) pour mesurer la température intérieure du récipient et une unité de régulation de la température (36) reliée au récipient (30) et/ou disposée dans le même.

11. Dispositif selon l'une quelconque des revendications 5 à 10, **caractérisé en ce que**
le dispositif (10, 29) comporte une pompe (19) pour transporter des composants dans le récipient (11, 30).

12. Dispositif selon l'une quelconque des revendications 5 à 11, **caractérisé en ce que**
le dispositif (10, 29) comporte une vanne de purge (20) pour prélever le réfrigérant du récipient (11, 30).

13. Dispositif selon l'une quelconque des revendications 5 à 12, **caractérisé en ce que**
le dispositif (10, 29) comporte un réservoir ayant une conduite d'alimentation (12, 13, 38) pour chaque composant, une vanne de dosage (14, 15, 37) et un capteur du débit massique (16, 17, 39) étant reliés dans la conduite d'alimentation pour alimenter le récipient (11, 30) en le composant.

14. Dispositif selon la revendication 13,
**caractérisé en ce que**
les conduites d'alimentation (12, 13, 18, 37) sont reliées à un mélangeur statique ou un mélangeur à jet du dispositif (10, 29).

15. Dispositif selon l'une quelconque des revendications 5 à 14, **caractérisé en ce que**
le réfrigérant a un glissement de température de ≥ 10 K, de préférence ≥ 15 K, encore de préférence ≥ 18 K.

16. Dispositif selon l'une quelconque des revendications 5 à 15, **caractérisé en ce que**
le réfrigérant a un équivalent CO₂ relatif, sur 20 ans, de < 2500, de préférence < 1500, encore de préférence < 500.

17. Dispositif selon l'une quelconque des revendications 5 à 16, **caractérisé en ce que**
le réfrigérant est incombustible.

18. Dispositif selon l'une quelconque des revendications 5 à 17, **caractérisé en ce que**
le réfrigérant est réalisé pour être utilisé pour une température dans une plage de -60 °C à +180 °C, de préférence de -70 °C à +180 °C, encore de préférence de -80 °C à +180 °C.

19. Machine de réfrigération ayant un dispositif (10, 29) selon l'une quelconque des revendications 5 to 18.
